(19)

Europäisches
Patentamt
European
Patent Office
Office européen
des brevets

(11) **EP 2 177 116 A1**

(12) **EUROPEAN PATENT APPLICATION**
published in accordance with Art. 153(4) EPC

(43) Date of publication:
**21.04.2010 Bulletin 2010/16**

(21) Application number: **08827458.4**

(22) Date of filing: **06.08.2008**

(51) Int Cl.:
*A23L 3/00* *(2006.01)*     *A23L 3/14* *(2006.01)*
*B65B 55/02* *(2006.01)*     *B65B 55/14* *(2006.01)*

(86) International application number:
**PCT/JP2008/064109**

(87) International publication number:
**WO 2009/022596 (19.02.2009 Gazette 2009/08)**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **10.08.2007 JP 2007209514
16.11.2007 JP 2007323996**

(71) Applicant: **Toyo Seikan Kaisha, Ltd.
Tokyo 100-0011 (JP)**

(72) Inventors:
• **ARAKI, Soji
Yokohama-shi
Kanagawa 230-0001 (JP)**

• **TAGUCHI, Yoshifumi
Yokohama-shi
Kanagawa 230-0001 (JP)**
• **TAKAI, Taizou
Izumisano-shi
Osaka 598-0061 (JP)**
• **HATANO, Yasushi
Yokohama-shi
Kanagawa 230-0001 (JP)**

(74) Representative: **von Kreisler Selting Werner
Deichmannhaus am Dom
Bahnhofsvorplatz 1
50667 Köln (DE)**

(54) **METHOD OF STERILIZING POUCHED FLUID FOOD**

(57) At a filling rate at which sterilizing time becomes constant without depending on an amount of head space gas in a graph showing relationship between the sterilizing time and the amount of head space gas in which the vertical axis represents the sterilizing time and the horizontal axis represents the amount of the head space gas, a liquid food is filled in a flexible pouch and, after the pouch is sealed, the pouch in unrestrained condition is subjected to reciprocating sterilization.

EP 2 177 116 A1

## Description

Technical Field

The present invention relates to a method for sterilizing a liquid food such as a food in a liquid state e.g., a drink, a viscous liquid food such as curry and an enteral nutrition forumula, said liquid food being filled in a pouch which is then sealed and reciprocated in a sterilizer for sterilization.

Background Art

In a case where a food filled in a container is sterilized, sterilizing time is determined by a period of time until a sterilization value ($F_0$ value) at a place called the cold spot (i.e., the point which is heated most belatedly or the coldest point) where rising of temperature is most difficult in the container reaches a necessary value. Accordingly, temperature history or $F_0$ value becomes excessive in the vicinity of the wall of the container which has a good heat transmission property and, as a result, difference in the temperature history among parts of the container causes prolongation of sterilizing time and deterioration in the quality of contents of the container. Since total sterilizing time of temperature rising time, sterilizing time and cooling time depends upon various factors such, for example, as material and configuration of the container, filling amount of contents and head space gas amount, heat transmission characteristic of the contents and viscosity of the contents, various methods for sterilization have been studied from the standpoint of improvement of productivity including shortening of sterilizing time and also from the standpoint of prevention of deterioration of the contents with respect to each of canned food, bottled food and pouched food.

In the case of sterilizing a liquid food filled in a pouch, a sterilizer called a stationary type sterilizer is generally used. In a case where there is a relatively large amount of gas in the head space of a pouch, the gas prevents heat transmission resulting in prolongation of the sterilizing time and deterioration in efficiency of production and, for this reason, sterilization is carried out with as little amount of gas in the head space as possible. In contrast, in a rotational type sterilization, head space gas in a pouch moves about due to rotation thereby to forcibly stir contents of the pouch and, as a result, heat transmission in the contents is enhanced and the sterilizing time can be shortened. Hence, amount of the head space gas should be calculated as accurately as possible. Moreover, in the rotational type sterilization, space for installing a rotation unit is needed and the pouch must be restricted by using a jig or a shelf for exclusive use for the pouch must be provided for preventing movement of the pouch in the sterilizer. Consequently, according to this method, the number of pouches placed in the sterilizer is limited resulting in deterioration in the efficiency of production or, by the use of the shelf for exclusive use for the pouches, the cost rises resulting in economic disadvantage of this method.

In sterilizing a cooked food for non-domestic use filled in a large size pouch having an internal capacity of 1 - 10 kg, particularly a pouch having an internal capacity of 1 - 5 kg, the amount of head space gas in the pouch tends to become irregular. If the amount is in short of a target gas amount, it is likely to give rise to insufficient sterilization whereas if the amount of the filled gas is excessive, it is likely to give rise to excessive sterilization resulting in deterioration of the quality of the contents. It therefore becomes important to fill in a constant amount of gas accurately in the pouch.

In filling contents in a pouch by a conventional filler, however, it is difficult to maintain the shape of the pouch constant due to flexibility of the pouch. As a result, the amount of the head space gas becomes significantly irregular as a matter of fact and it is very difficult to fill each of pouches with a uniform amount of head space gas. Consequently, for filling each of pouches with a uniform amount of head space gas, it becomes necessary to provide a special device for uniformly filling each of pouches with a constant amount of head space gas and also provide a special examination device for examining the amount of the head space gas in each of the pouches in an unbroken state of the pouch.

Japanese Patent Application Laid-open Publication No. Hei 9-221108 discloses a device and a method for obtaining a food filled in a pouch which can prevent leakage of gas from a pouch during filling of the gas and a constant amount of gas can be filled accurately in the pouch and thereby the pouch has an accurate amount of head space.

Disclosure of the Invention

The present invention has been made in view of the above described problems of the prior art method for sterilizing a food filled in a pouch. It is an object of the present invention to provide a novel method for sterilization according to which, in reciprocation type sterilization of a pouched food (see Japanese Patent Application Laid-open Publication No. 2008-17726) in which a sterilizing shelf on which pouched food is placed is reciprocated horizontally or laterally, a severe examination of the amount of head space gas during and after filling of contents in the pouch can be obviated, the sterilizing time can be shortened by using only an existing filling apparatus, and difference in temperature history of contents in the pouch can be held at the minimum whereby deterioration of quality can be prevented.

Accumulated studies and experiments made by the inventors of the present invention have resulted in the finding, which has led to the present invention, that, by carrying out the reciprocation type sterilization under a specific condition with the filling rate of a liquid food in a pouch being adjusted within a specific range, there takes place the phenomenon that the liquid food in the pouch moves about resulting in undulation of the pouch whereby the sterilizing time can be shortened and becomes substantially constant without depending substantially upon the amount of the head space gas. The term "filling rate of a liquid food" herein means a rate of an actual volume of a filled food to a maximum volume that can be filled in the pouch (internal capacity of the pouch when the liquid food is filled fully) and sealed. The method for determining the filling rate will be described later.

In the first aspect of the invention, there is provided a method for sterilizing a liquid food filled in a pouch comprising a step of filling a liquid food in a flexible pouch and sealing the pouch and a step of sterilizing the liquid food filled in the pouch by reciprocating the pouch in a sterilizer, wherein acceleration speed of reciprocation in reciprocating sterilization, pressure in the sterilizer, viscosity of the liquid food and filling rate of the liquid food are adjusted so that, on the assumption that sterilizing time is a period of time from time at which temperature in the sterilizer has reached sterilizing temperature (Tr°C) till time at which sterilization value (F(Tr°C) of the sealed pouch given by the following formula (1)

$$F(Tr°C) = \int_0^T 10^{(Ti-Tr)/10} dt \cdot \cdot \cdot (1)$$

(wherein Ti represents temperature at the coldest spot in the pouch at t minutes after start of sterilization and dt represents infinitesimal time)

becomes F(Tr°C) = 10 minutes, sterilizing time (T(0%)) at which head space of the sealed pouch which is used as an indicator is 0% and sterilizing time (T(10%)) at which the head space of the sealed pouch is 10% will satisfy the following formula (2)

$$1 \leqq T(0\%)/T(10\%) \leqq 1.2 \quad \cdots \quad (2).$$

This method can be realized preferably by combining one or more factors of acceleration speed of reciprocation in reciprocating sterilization, pressure in the sterilizer, viscosity of the liquid food and filling rate of the liquid food.

In the second aspect of the invention, there is provided a method as defined in the first aspect wherein the sealed pouch is placed on a shelf in the sterilizer in unrestrained condition and the sterilizer is operated to reciprocate the pouch at acceleration speed of reciprocation within a range from 0.1G to 0.3G.

In the third aspect of the invention, there is provided a method as defined in the first or second aspect wherein amount of filling of the liquid food is adjusted to a range from 30 volume % to 70 volume % on the assumption that internal capacity of the pouch when the liquid food is filled fully is 100 volume %.

In the fourth aspect of the invention, there is provided a method as defined in any of the first to fourth aspects wherein the amount of the head space is adjusted to a range from 0% to 5% of the volume of the liquid food.

The percentage (%) of the head space amount in the present invention means percentage to the liquid food of the volume 100% at room temperature.

In the fifth aspect of the invention, there is provided a method as defined in any of the first to third aspects wherein the amount of the head space is adjusted to a range from 2% to 20% of the volume of the liquid food.

In the sixth aspect of the invention, there is provided a method as defined in any of the first to fifth aspects wherein, when the liquid food has reached the sterilizing start temperature, viscosity of the liquid food measured or calculated by using a B-type viscometer at 50 rpm is within a range from 0.2 mPa · s to 4500 mPa · s.

In the seventh aspect of the invention, there is provided a method for sterilizing a liquid food filled in a pouch comprising a step of filling a liquid food in a flexible pouch and sealing the pouch and a step of sterilizing the liquid food filled in the pouch by reciprocating the pouch in a sterilizer wherein viscosity of the liquid food measured or calculated by using a B-type viscometer at 50 rpm is within a range from 0.2 mPa · s to 4500 mPa · s and amount of filling of the liquid food is within a range from 30 volume % to 60 volume % on the assumption that internal capacity of the pouch when the liquid food is filled fully is 100 volume %.

In the eighth aspect of the invention, there is provided a method as defined in the seventh aspect wherein the sealed pouch is placed on a shelf in the sterilizer in unrestrained condition and the sterilizer is operated to reciprocate the pouch at acceleration speed of reciprocation within a range from 0.1G to 0.3G.

In the ninth aspect of the invention, there is provided a method as defined in the seventh or eighth aspect wherein the amount of the head space of the sealed pouch is within a range from 2% to 20% of the volume of the liquid food.

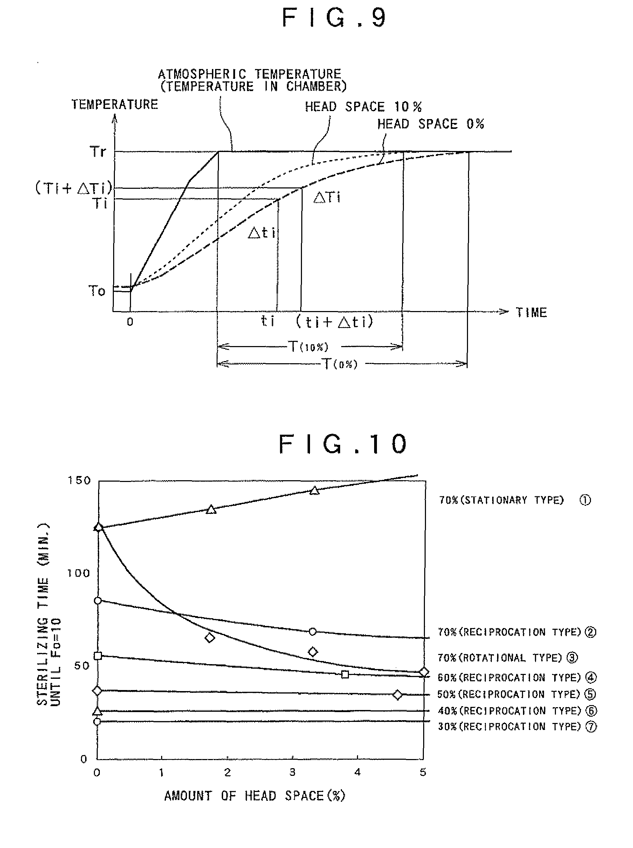

According to the first aspect of the invention, as shown in FIG. 9, by weighing and filling a liquid food in a flexible pouch while adjusting the filling rate so as to achieve a constant filling rate, adjusting the amount of the head space and sealing the pouch, and then sterilizing the liquid food filled in the pouch by reciprocating the pouch in a sterilizer in such a manner that acceleration speed of reciprocation in reciprocating sterilization, pressure in the sterilizer, viscosity of the liquid food and filling rate of the liquid food are adjusted so that, on the assumption that sterilizing time is a period of time till time at which sterilization value (F(Tr°C) becomes F(Tr°C) = 10 minutes, sterilizing time (T(0%)) at which head space of the sealed pouch which is used as an indicator is 0% and sterilizing time (T(10%)) at which the head space of the sealed pouch is 10% will satisfy the formula $1 \leqq T(0\%)/T(1.0\%) \leqq 1.2$, the liquid food in the pouch moves about by virtue of flexibility of the pouch and sufficient stirring is achieved. Accordingly, within a specific range of the rate of amount of the head space gas to the volume of the liquid food, necessary sterilizing time can be shortened and becomes substantially constant without substantially depending upon the amount of the head space gas and temperature of the contents becomes substantially uniform in all spots in the pouch. Consequently, even if there is irregularity in the amount of the head space gas among pouches, there is no likelihood of insufficient sterilizing time.

The present invention is a method for sterilizing a liquid food filled in a pouch **characterized in that** the reciprocating sterilization is carried out so that, on the assumption that sterilizing time is a period of time from time at which temperature in the sterilizer has reached sterilizing temperature (Tr°C) till time at which sterilization value (F(Tr°C) of the sealed pouch given by the following formula (1)

$$F(Tr°C) = \int_0^T 10^{(Ti-Tr)/10} dt \cdot \cdot \cdot (1)$$

becomes F(Tr°C) = 10 minutes, sterilizing time (T(0%)) at which head space of the sealed pouch which is used as an indicator is 0% and sterilizing time (T(10%)) at which the head space of the sealed pouch is 10% will satisfy the following forumula (2)

$$1 \leqq T(0\%)/T(10\%) \leqq 1.2 \cdots (2).$$

According to the invention, by carrying out the reciprocating sterilization under a specific condition within a specific range of the filling rate of the liquid food in the pouch, the liquid food in the pouch moves about resulting in undulation of the pouch whereby the sterilizing time is shortened and becomes substantially constant without substantially depending upon the amount of the head space. In the search made by the inventors of the present invention for conditions suitable for carrying out the invention, the inventors have found, as a result of laborious studies, that they can use the formula (1) which is well known in the field of sterilization by heating and can conduct automatic calculation by a personal computer or the like on real time basis during a sterilizing process. In the present invention, a period time until the sterilization value at the cold spot obtained by integrating the formula (1) from start of sterilization till t minutes after has reached F(Tr°C) = 10 minutes is used as the sterilizing time and the object of the invention can be achieved by carrying out the reciprocating sterilization on the basis of the condition that sterilizing time (T(0%)) at which head space of the sealed pouch which is used as an indicator is 0% and sterilizing time (T(10%)) at which the head space of the sealed pouch is 10% will satisfy the formula (2)

The formula (1) is a basic formula for calculating $F_0$ value which is a sterilization effect against Clostridium botulinum when Tr=121°C ( see "Basis and Application of Retort Foods" Pages 76 - 80, Revised Edition, First Printing published by Kabushiki Kaisha Saiwai Shobo). In the present invention, application of the formula (1) is not limited to the specific sterilizing temperature of 121°C b ut the sterilizing temperature may be selected within a range from 65°C t o 135°C o r a range exceeding 135°C according to necessity. In the present invention, although Z=10°C (18° F) of Clostridium botulinum is used, no specific bacterium is in mind but the formula against Clostridium botulinum which is generally used is employed. Z value herein means an amount of change in heating temperature corresponding to change of 1/10 or 10-times in the lethality time or lethality rate. The sterilization value F(Tr°C) during actual production of the pouched food is also not limited to 10 minutes but it may be longer or shorter than 10 minutes and may be set at a suitable period of time so long as the condition is one obtained by adjusting one or more of acceleration speed, pressure in the sterilizer, viscosity of the liquid food and filling rate of the contents in the reciprocating sterilization to satisfy the formula (2). As to the condition of temperature elevation in heating the inside of the sterilizing chamber, it may be set at a suitable condition according to an actual condition of production. For example, elevation of temperature may be made by one step heating method according to which the temperature is elevated with a constant slope or may be made by one step heating method according to which the temperature is elevated with a slope which changes in the midway. Alternatively, elevation of temperature may be made by two step heating method which is carried out for retaining taste and functional components of the contents. In other words, before the temperature in the sterilizer reaches a final sterilizing temperature, the temperature may be elevated to a temperature at which the quality of the contents is not deteriorated, the temperature may be held at this value for a certain period of time for elevating the temperature of the contents and then the temperature in the sterilizer may be elevated to the final sterilizing temperature.

Thus, according to the invention, the object of the invention can be achieved by determining the condition of the reciprocating sterilization and carrying out the reciprocating sterilization so that, on the assumption that sterilizing time is a period of time till the sterilization value becomes $F(Tr°C) = 10$ minutes , sterilizing time ($T(0\%)$) at which head space of the sealed pouch which is used as an indicator is 0% and sterilizing time ($T(10\%)$) at which the head space of the sealed pouch is 10% will satisfy the formula (2).

According to the invention, by carrying out the reciprocating sterilization under the condition in which one or more of acceleration speed of the reciprocating sterilization, pressure in the sterilizer, viscosity of the liquid food and filling rate of the contents have been adjusted to satisfy the formula (2), stirring of the contents is enhanced and difference in the temperature history between the portion in the vicinity of the wall of the pouch and the cold spot in the central portion of the pouch can be reduced. Further, by carrying out the reciprocating sterilization, irregularity in the sterilization value ($F_0$ value) among parts of the pouch is held at the minimum and, for this reason, examination of $F_0$ value may be made only at a few spots. This improves working efficiency remarkably in comparison to the prior art method which fails to satisfy the above described condition and in which examination of $F_0$ value must be made at several tens spots. Further, a severe control of the amount of the head space gas during and after filling of the contents is not necessary and, therefore, the sterilizing time can be shortened by utilizing the existing apparatus and a pouched food of an excellent quality can be produced in a stable manner.

The present application can be applied to all sizes of pouch. The present invention can be preferably applied to large sized pouches with an internal capacity within a range from 1 kg to 10 kg, particularly within a range from 1 kg to 5 kg.

According to the second aspect of the invention, the sealed pouch is placed on a shelf in the sterilizer in unrestrained condition and the sterilizer is operated to reciprocate the pouch at acceleration speed of reciprocation within a range from 0.1G to 0.3G whereby the liquid food can be stirred sufficiently while moving of the pouch on the shelf due to reciprocation can be prevented and, therefore, it is not necessary to provide a jig for restricting the pouch or a provide a shelf exclusively for the pouch. Thus, decrease in the productivity caused by using a jig and the cost incurred by the provision of the exclusive shelf can be avoided. The reciprocation in the horizontal direction can be made by the known method using a crank etc.

According to the third aspect of the invention, amount of filling of the liquid food is adjusted to a range from 30 volume % to 70 volume % on the assumption that internal capacity of the pouch when the liquid food is filled fully is 100 volume % whereby the liquid food in the pouch moves about during the reciprocating sterilization due to the flexibility of the pouch resulting in undulation of the pouch and stirring of the liquid food can be made sufficiently and, therefore, necessary sterilizing time can be shortened and becomes substantially constant without substantially depending upon the amount of the head space gas. The temperature of the contents becomes substantially constant at all spots in the pouch and, therefore, there is no likelihood of insufficient sterilizing time even if there is irregularity in the amount of the head space gas among pouches. In other respects, the invention of this aspect can perform the same advantageous effects as in the invention of the first aspect.

According to the fourth aspect of the invention, the amount of the head space is adjusted to a range from 0% to 5% of the volume of the liquid food whereby, within this range, necessary sterilizing time is significantly shortened compared to the stationary type sterilization and, in a case where the amount of the head space is small, the sterilizing time is shortened compared to the rotational type sterilization. Further, necessary sterilizing time becomes substantially constant without depending upon the amount of the head space and the temperature of the contents becomes substantially constant at all spots in the pouch.

According to the fifth aspect of the invention, the amount of the head space is adjusted to a range from 2% to 20% of the volume of the liquid food whereby, within this range, necessary sterilizing time can be shortened and becomes substantially constant compared to the stationary type sterilization and the temperature of the contents becomes substantially constant at all spots in the pouch.

According to the sixth aspect of the invention, when the liquid food has reached the sterilizing start temperature, viscosity of the liquid food measured or calculated by using a B-type viscometer at 50 rpm is within a range from 0.2 mPa · s to 4500 mPa · s whereby, so long as the amount of the head space gas to the volume of the liquid food is within the specific range, necessary sterilizing time can be shortened and becomes substantially constant without substantially depending upon the amount of the head space gas and the temperature of the contents becomes substantially constant at all spots in the pouch and, therefore, there is no likelihood of insufficient sterilizing time even if there is irregularity in the amount of the head space gas among pouches.

According to the seventh aspect of the invention, the liquid food is filled and the pouch is sealed and the reciprocating sterilization is made in such a manner that viscosity of the liquid food measured or calculated by using a B-type viscometer at 50 rpm is within a range from 0.2 mPa · s to 4500 mPa · s and amount of filling of the liquid food is within a range from 30 volume % to 60 volume % on the assumption that internal capacity of the pouch when the liquid food is filled fully is 100 volume %, whereby the liquid food in the pouch moves about due to the flexibility of the pouch resulting in undulation of the pouch in appearance and stirring of the liquid food thereby can be made sufficiently and necessary sterilizing time can be shortened. Further, although it depends upon viscosity and filling rate of the liquid food, when, for example, viscosity and filling rate of the liquid food are relatively low, the sterilizing time is shortened and becomes substantially constant without substantially depending upon the amount of the head space gas. Since the temperature of the contents becomes substantially constant at all spots in the pouch, there is no likelihood of insufficient sterilizing time even if there is irregularity in the amount of the head space gas among pouches.

According to the eighth aspect of the invention, the sealed pouch is placed on a shelf in the sterilizer in unrestrained condition and the sterilizer is operated to reciprocate the pouch at acceleration speed of reciprocation within a range from 0.1G to 0.3G whereby the same advantageous effect as that of the second aspect of the invention can be performed.

According to the ninth aspect of the invention, the amount of the head space of the sealed pouch is within a range from 2% to 20% of the volume of the liquid food whereby the same advantageous effect as that of the fifth aspect of the invention can be performed.

Brief Description of the Drawings

FIG. 1 is a sectional view of an example of a device for carrying out the method of the present invention.

FIG. 2 is a diagram showing locations of ten measuring spots at which temperature of contents is measured in Example 1.

FIG. 3 is a graph showing change in temperature of the contents and change in temperature in the retort chamber in Example 1.

FIG. 4 is a diagram showing locations of twelve measuring spots at which temperature of contents is measured in Comparative Example 1.

FIG. 5 is a graph showing change in temperature of the contents and change in temperature in the retort chamber in Comparative Example 1.

FIG. 6 is a graph showing relationship between the filling rate and the sterilizing time in reciprocating retort sterilization.

FIG. 7 is a graph showing relationship between the filling rate and the sterilizing time in reciprocating retort sterilization.

FIG. 8 is a graph showing relationship between viscosity and sterilizing time of various liquid foods by comparing the stationary type sterilization with the rotational type sterilization

FIG. 9 is a graph showing relationship between time required for reaching the sterilizing temperature and the amount of the head space.

FIG. 10 is a graph showing the range of 0 - 5% of the amount of the head space in FIG. 6 in en enlarged scale.

FIG. 11 is a graph showing the range of 2 - 10% of the amount of the head space in FIG. 6 in en enlarged scale.

Description of Preferred Embodiments

Embodiments of the invention will now be described with reference to the accompanying drawings.

The sterilizing method of the invention is suitable for a case where a liquid food is filled in a pouch, particularly a large size pouch having an internal capacity of 1 - 10 kg, particularly 1 - 5 kg, the pouch is sealed and then the pouch is subjected to the reciprocating sterilization.

As to the pouch, there is no particular restriction so long as it is made of a flexible material. Usually, a pouch made of four layers of a PET (polyethylene terephthalate) layer, a nylon layer, an aluminum foil layer and a polypropylene layer from the outside used generally for a large size pouch can be employed. As to the shape of the pouch, a flat pouch, a standing pouch or a deformed pouch may be used.

The liquid food includes liquid foods having low viscosity, middle viscosity and high viscosity such as a drink, viscous liquid foods including solid food such as meat and vegetables, e.g., curry and potage soup, and viscous liquid foods including granular solid food such as gruel. For achieving the above described advantageous results in the reciprocating retort sterilization, when the reciprocating condition and the sterilization condition are fixed, it is important how viscosity of the liquid food has dropped by the time at which the sterilizing temperature has been reached. It has been found that, in the case of a liquid food which has, when the sterilizing temperature has been reached, viscosity of 4500 mPa · s or below as measured in the condition of 50 rpm, the sterilizing time can be made substantially constant without substantially depending upon variation in the amount of the head space within a range in which the amount of the head space is 2 - 20% of the volume of the liquid food at room temperature, if the filling rate of the liquid food is within a range from 30 vol.% to 70 vol.% measured at room temperature or in the vicinity thereof to the internal capacity of the pouch when it is fully filled. When the filling rate is 60 - 70 vol. %, variation in the sterilizing time is relatively large if the head space gas is less than 2 vol. % and, therefore, it is difficult to attain constant sterilizing time.

If viscosity at the time when the sterilizing temperature has been reached as measured or calculated in the condition of 50 rpm exceeds 4500 mPa · s, viscosity of the contents is excessively high and therefore undulation of the pouch during the reciprocating sterilization is weak and stirring of the contents is insufficient and, accordingly, there is not much effect of shortening of the sterilizing time.

As viscosity of the liquid food used in the present invention, viscosity as measured or calculated by a B-type viscometer at 50 rpm when the sterilizing temperature has been reached should preferably be 4500 mPa · s or below, more preferably be 2500 mPa · s or below and most preferably be 1500 mPa · s or below for increasing the effect of shortening of the sterilizing time. When viscosity of the contents is extremely low, heat convection take place in the contents and this reduces the effect of shortening of the sterilizing time in the reciprocating sterilization compared to a stationary type sterilizer. For this reason, the lower limit of viscosity should preferably be 0.2 mPa · s and, more preferably be 10 mPa · s. Since the stirring effect by reciprocation cannot be expected in a powdery food or a solid food, application of the present invention to such food is unsuitable but there is no problem in applying the present invention in a case where a liquid food includes a solid food partly as in curry.

The filling rate at which the sterilizing time for achieving $F_0$ value becomes constant without substantially depending upon variation in the amount of the head space gas differs depending upon rigidity of the pouch, viscosity of the contents, sterilizing temperature, conditions of reciprocation (i.e., acceleration speed, frequency, stroke of reciprocation) and other factors. As a result of experiments, it has been found, as described above, that, within a range of the filling rate from 30 vol. % to 70 vol. %, the sterilizing time can be significantly shortened as compared to the prior art method even if the amount of the head space gas varies.

The head space formed in the pouch when contents have been filled in the pouch may be atmosphere. For preventing deterioration of the contents due to oxidization, the head space gas may be replaced by nitrogen gas, carbon dioxide, argon gas, or mixture of these gases. The amount of the head space gas is generally limited to 20% or below, and preferably 10% or below, of the amount of the contents filled in the pouch. If the amount of the head space gas exceeds 20%, influence of oxygen to the contents becomes a level which cannot be neglected even if replacement of the head space gas is made. Besides, for packing products after filling and sealing of pouches, a large carton becomes necessary resulting in decrease in loading efficiency and economic disadvantage.

For carrying out the reciprocating sterilization, a conventional reciprocating retort apparatus of a crank type or an eccentric cam type may be used.

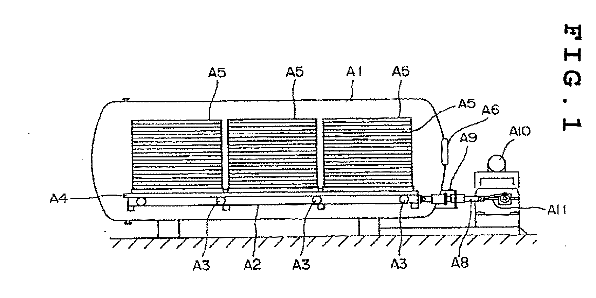

FIG. 1 is a sectional view showing an example of a device for carrying out the method of the present invention which comprises a crank type mechanism for reciprocating sterilizing shelves. Reference character A1 designates a retort main body and A2 designates a support such as rails. A movable table A4 is mounted on the support A2 via wheels A3. On the movable table A4, sterilizing shelves (trays) A5 are mounted in multiple stages in each of which are housed pouches of a liquid food. An inspection window A6 is provided in the retort main body A1. There is provided a crank mechanism A11 which is driven by a motor A10. One end of the crank mechanism A11 is connected to a drive shaft A8 which projects from the movable table A4 via a seal mechanism A9 of the retort main body A1.

By driving the motor A10 during a drive mode, the movable table A4 reciprocates by means of the crank mechanism A11 and the liquid food in the pouches housed in the sterilizing shelves moves about to undulate the pouches whereby stirring of the liquid food is performed. This phenomenon of undulation of the pouches of the liquid food can be confirmed by eye through the inspection window A6.

Acceleration speed is one factor of the stirring effect in the reciprocating type retort. It has been considered that there is an optimum range of acceleration speed in view of durability of a packing material and a mode of actual production.

For finding out an optimum acceleration speed, experiments were made under the following conditions:

Structure of laminate: four layer construction of PET, nylon, aluminum foil and polypropylene layers from the outside

Pouch size: 240mm × 350mm × 65mm (length, breadth, folding width)

Contents: tomato sauce (tomato sauce which was commercially available, non-domestic use, packed in a large size pouch was re-packed. Viscosity of the tomato sauce was 1040 mPa · s at 40˚C, 880 mPa · s at 60˚C a nd 724 mPa · s at 80˚C)

Amount of filling: 2 kg (filling rate: 45%)

Temperature of contents: The contents were filled in the pouch at 40˚C a nd offered for experiments

In producing the pouched product made in the above described conditions, acceleration speed (G) was changed by changing the stroke and the number of rotation as shown in Table 1 and the degree of undulation of the pouch and the degree of collapse of alignment of the pouches were observed. Results of the observation is shown in Table 2.

Table 1

| Frequency of reciprocation (number of times/minute) | | | | |
|---|---|---|---|---|
| 30 | 45 | 60 | 75 | 90 |

Length of stroke (mm)

| | 30 | 45 | 60 | 75 | 90 |
|---|---|---|---|---|---|
| 50 | 0.03 | 0.06 | 0.11 | 0.18 | 0.25 |
| 75 | 0.04 | 0.10 | 0.18 | 0.28 | 0.40 |
| 100 | 0.06 | 0.14 | 0.25 | 0.39 | 0.57 |
| 150 | 0.10 | 0.23 | 0.42 | 0.65 | 0.93 |

(unit of acceleration speed: G)

Table 2

| Frequency of reciprocation (number of times/minute) | | | | |
|---|---|---|---|---|
| 30 | 45 | 60 | 75 | 90 |

Length of stroke (mm)

| | 30 | 45 | 60 | 75 | 90 |
|---|---|---|---|---|---|
| 50 | × | × | ◎ | ◎ | ○ |
| 75 | × | ◎ | ◎ | ○ | △ |
| 100 | × | ◎ | ○ | △ | △ |
| 150 | ◎ | ○ | △ | △ | △ |

×: The acceleration speed was weak and "undulation of the pouch was extremely small" or "no stirring was observed".

◎: The acceleration speed was proper and "undulation of the pouch occurred in a suitable manner" or "the packing material was not shifted significantly while "stirring took place".

○: The acceleration speed was high and "undulation of the pouch took place significantly" or "a large stirring effect could be expected" but collapse of alignment of the pouches took place depending upon the product.

△: the acceleration speed was so high that collapse of alignment of the pouches and damage to the pouches took place.

As a result of the experiments, when the acceleration speed is less than 0.1G, undulation of the pouch is extremely small resulting in insufficient stirring (or no advantage was observed by measuring the temperature).
As the acceleration speed increases, undulation of the pouch increases and stirring of the contents also increases in proportion thereto. However, as the acceleration speed exceeds 0.3G, the pouches are shifted on the sterilizing shelves resulting in collapse of alignment of the pouches, or occurrence of scratches caused by friction between the pouches and the sterilizing shelves, or occurrence of cracks (resembling pin holes) in the aluminum foil layer.

Accordingly, the range of the acceleration speed within which a sufficient stirring effect can be achieved and there is no likelihood of collapse of alignment of the pouches, or occurrence of scratches of the pouches regardless of the type of the product is 0.1G to 0.3G.

Then, the following experiment was made for examining relationship between the filling rate and the amount of the head space gas and relationship between the filling rate and the sterilizing time shortening effect:

Sterilizing method: reciprocating type hot shower retort
Reciprocation system: crank system
Speed of reciprocation; 60 times/minutes
Stroke: 75 mm
Acceleration speed: 0,18G
Reciprocation pattern: continuous reciprocation
Direction of reciprocation: horizontal
Direction of mounting the pouches: The pouch was placed with its longitudinal direction in alignment with the direction of reciprocation.
Sterilizing condition: 121 ˚C , 0.23 MPa (temperature · pressure)
Elevation time (from room temperature to the sterilizing temperature): 12 minutes
Cooling time (from the sterilizing temperature to 30˚C): 12 minutes
End temperature: 30˚C
Contents: curry (a commercially available non-domestic use curry packed in a large size pouch was re-packed. Viscosity: 3230 MPa · s at 40˚C, 2300 mPa · s at 60˚C a nd 1800 mPa · s at 80˚C a s measured by a B-type viscometer at 50 rpm. Viscosity at 121˚C is assumed to be 1120 mPa · s (to be described later)
Laminate structure: four layer construction of PET, nylon, aluminum foil and polypropylene layers from the outside
Pouch size: 240mm × 350mm × 65mm (length, breadth, folding width

The internal capacity when the contents are filled fully and the filling rate were determined in the following manner:

(1) The internal capacity when the contents are filled fully
In the state where contents were filled in the pouch, the maximum internal capacity of the pouch which enables sealing of the pouch by an instrument such as an impulse sealer is determined to be the internal capacity when the contents are filled fully.

(2) The filling rate measuring method (in case of a standing pouch)

(a) Weight of the empty pouch was measured and recorded.
(b) The pouch was sealed retaining about 2 cm of the top seal portion.
(c) In the state in which the pouch stood by itself, water at 20˚C ± 5˚Cwas filled in the pouch until it overflows, retaining the top seal portion of the pouch.
(d) The retained portion was folded and sealed while excluding water.
(e) The weight of the pouch as a whole after filling was measured, the weight of the empty pouch was deducted from this weight and the difference was made the internal capacity when the contents are filled fully.

In the case of a flat pouch, since the flat pouch does not stand by itself, water is filled in the manner of (c) by hanging the pouch by holding an end portion of the top seal portion and subsequent measurement is made.

Example 1

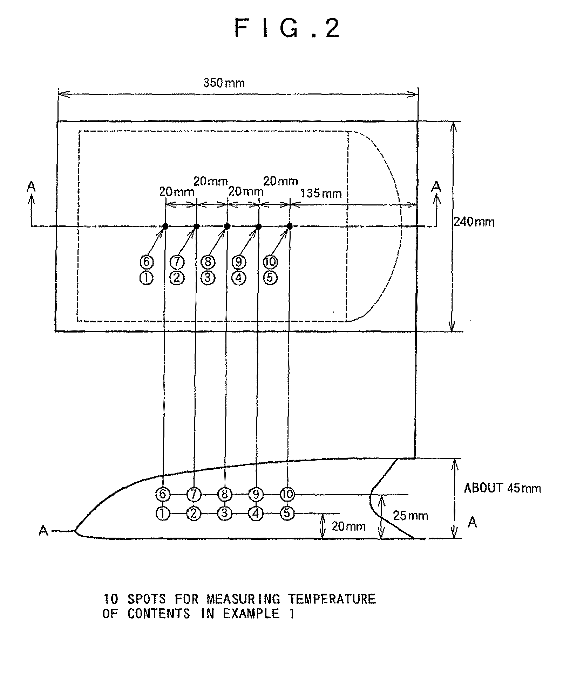

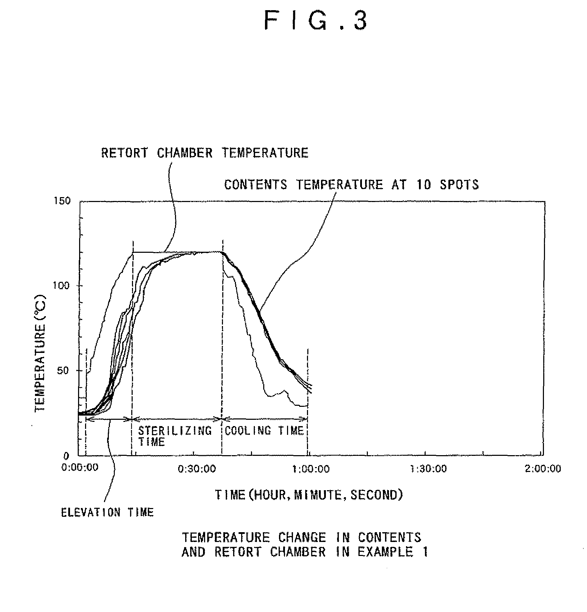

Curry of 2 kg was filled in a pouch at the filling rate of 45% and, with amount of the head space of 5.0% (about 100 ml), the reciprocating type retort sterilization was performed under the condition of sterilization described above. Temperature change of the contents was measured at 10 spots (shown in FIG. 2) which had possibility of becoming the cold spot. When $F_0$ value of the spot at which increase in $F_0$ value was the lowest reached 10, the cooling process was started. Change in temperature of the contents and change in temperature in the retort chamber are shown in FIG. 3.

In the reciprocating sterilization, a liquid food in pouches placed on the sterilizing shelves moves about in the pouches due to reciprocation of the sterilizing shelves resulting in undulation of the pouches whereby the liquid food is stirred and sterilization is performed uniformly. In the case of using the prior art temperature measuring jig (see Japanese Patent Publication No. Sho 63-39225), the upper and lower surfaces of the pouches are restricted by the jig and undulation of the pouch due to reciprocation is also restricted whereby stirring of the contents due to undulation of the pouch is reduced. For this reason, in the present example, temperature of the contents was measured in such a manner that the movement of the upper surface of the of pouch laid on the sterilizing shelf was not restricted by the temperature measuring jig.

In Example 1, as shown in FIG. 3, the pouch undulated with movement of the contents and, by virtue of stirring of the contents, change in temperature was made uniformly in the same pattern at all spots in the pouch. It is understood that, when the temperature exceeded 110˚C, viscosity of the contents drops and the stirring effect thereby increased resulting in convergence of the temperature of the contents at the respective spots.

Comparative Example 1

The reciprocating type retort sterilization was conducted under the conditions described above in the same manner as in Example 1 excepting that curry of 3 kg was filled in the pouch at the filling rate of 70%.

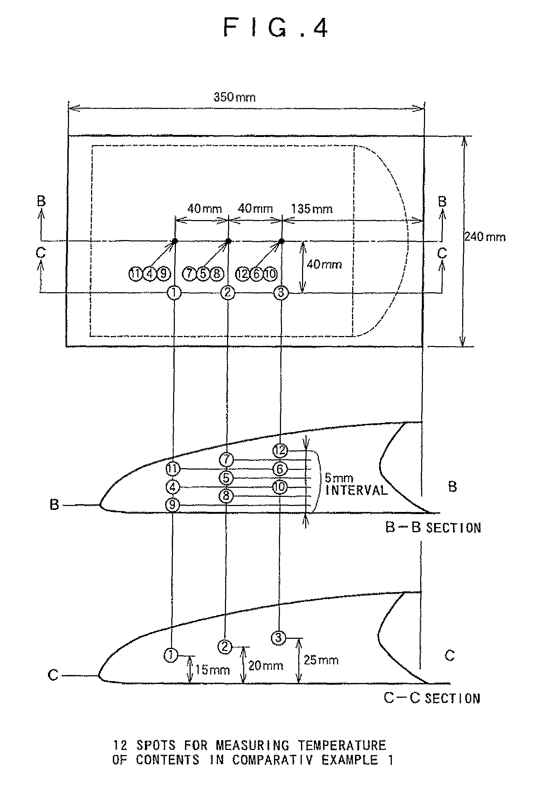

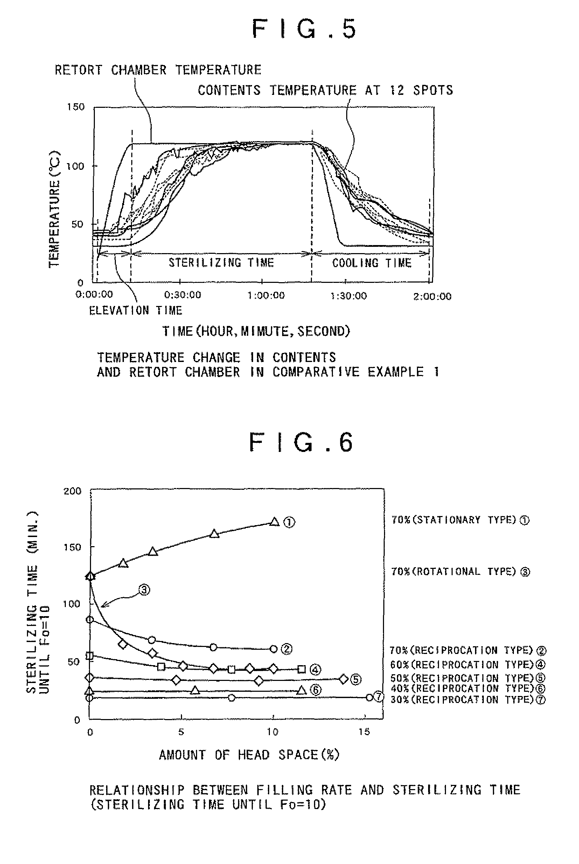

Temperature of the contents was measured at 12 spots (as shown in FIG. 4) which had possibility of becoming the cold spot. In the same manner as in Example 1, when $F_0$ value which of the spot at which increase in $F_0$ value was the lowest reached 10, the cooling process was started. Change in temperature of the contents and change in temperature in the retort chamber are shown in FIG. 5.

In Comparative Example 1, as shown in FIG. 5, temperature change in the respective spots in the pouch during the temperature elevation process was irregular. As observed in detail, temperatures at the respective spots repeats ups and downs significantly and from this it is assumed that location of the cold spot was moving in the pouch. It is understood that convergence of the temperatures of the contents at the respective spots was not sufficient even when the temperature exceeded 110˚C.

Final $F_0$ values at the respective measuring spots in Example 1 and Comparative Example 1 at the time when sterilization was completed are shown in Table 3.

| Table3 | | |
|---|---|---|
| Measuring spot | Example 1 | Comparative Example 1 |
| ① | 11.8 | 30.1 |
| ② | 12.2 | 13.2 |
| ③ | 12.3 | 13.1 |
| ④ | 12.3 | 19.7 |
| ⑤ | 12.9 | 14.6 |
| ⑥ | 12.6 | 16.8 |
| ⑦ | 12.9 | 23.2 |
| ⑧ | 13.3 | 25.3 |
| ⑨ | 13.3 | 16.9 |
| ⑩ | 13.3 | 11.4 |
| ⑪ | - | 33.1 |
| ⑫ | - | 16.3 |
| Number of measuring spots | 10 | 12 |
| Average value | 12.7 | 19 |
| Maximum value | 13.3 | 33.1 |
| Minimum value | 11.8 | 11.4 |
| Range | 1.5 | 21.7 |

In Example 1, difference (i.e., range) between the maximum value and the minimum value is 1.5 indicating that there is very little irregularity. In contrast, in Comparative Example 1, the range is 21.7 indicating that there is significant irregularity with the maximum $F_0$ value of 33.1.

$F_0$ value generally increases at a temperature of about 110˚C or over, indicating that the sterilizing state has been brought about. In Example 1, as shown in FIG. 3, when the temperature has reached 110˚C o r over, the temperature a t all of the measuring spots converge to substantially the same value and, therefore, in the same manner as in the stationary type retort, the $F_0$ value at the cold spot can be evaluated by measurement of the temperature only. In contrast, in Comparative Example 1, as shown in FIG. 5, convergence is insufficient even when the temperatures at the respective measuring spots have reached 110˚C o r over indicating ups and downs of the temperature and, therefore, it is difficult

to determine the $F_0$ value at the cold spot. Accordingly, the $F_0$ value at the cold spot is considered to be undeterminable by measurement of the temperature only. In FIG. 5, if low points in the temperature change curve of each of the measuring spots are traced with a gradual curve and this gradual curve is assumed to be change of the temperature at the cold spot for assuming $F_0$ value, a necessary $F_0$ value cannot be attained in almost all curves and, as a result, it is considered necessary to prolong the sterilizing time. In Comparative Example 1, the necessary sterilizing time according to this consideration was assumed to be about 85 minutes.

For examining relationship between an optimum amount of filling and sterilizing time and relationship between an amount of the head space gas and sterilizing time on the basis of results of Example 1 and Comparative Example 1, the reciprocating type retort and the stationary type retort were conducted by changing amount of filling and amount of the head space gas by using different filling rates for pouches offered for the experiments so as to compare sterilizing time. The different filling rates herein means respective volume % on the assumption that the internal capacity of the pouch offered for the experiment when the contents are filled fully is 100 volume %.

Example 2

In the same manner as in Example 1, curry of 1305 ml corresponding to the filling rate of 30% was filled in the pouch and the amount of the head space gas of the sample was adjusted to 0% (0 ml), 7.7% (100 ml) and 15.3% (200 ml) respectively and the reciprocating type retort sterilization was conducted under the same sterilizing conditions as in Example 1. FIG. 6 shows results showing relationship between the amount of the head space gas and the sterilizing time. The sterilizing time in the figure was determined by, in the same manner as in Example 1, assuming the lowest value in the measurement of the temperature of the contents at several spots to be the temperature change at the cold spot and measuring sterilizing time until $F_0$ value becomes $F_0 = 10$. The sterilizing time was calculated on the basis that T(0%)/T(10%) = 1.06 from FIG. 6.

Example 3

In the same manner as in Example 1, curry of 1740 ml corresponding to the filling rate of 40% was filled in the pouch and the amount of the head space gas of the sample was adjusted to 0% (0 ml), 5.7% (100 ml) and 11.5% (200 ml) respectively and the reciprocating type retort sterilization was conducted under the same sterilizing conditions as in Example 1. Results are shown in FIG. 6. The sterilizing time was calculated on the basis that T(0%)/T(10%) = 1.06 from FIG. 6.

Example 4

In the same manner as in Example 1, curry of 2175 ml corresponding to the filling rate of 50% was filled in the pouch and the amount of the head space gas of the sample was adjusted to 0% (0 ml), 4.6% (100 ml) 9.2%(200ml) and 13.8% (300 ml) respectively and the reciprocating type retort sterilization was conducted under the same sterilizing conditions as in Example 1. Results are shown in FIG. 6. The sterilizing time was calculated on the basis that T(0%)/T (10%) = 1.11 from FIG. 6.

Experimental Example 1

In the same manner as in Example 1, curry of 2610 ml corresponding to the filling rate of 60% was filled in the pouch and the amount of the head space gas of the sample was adjusted to 0% (0 ml), 3.8% (100 ml) 7.7%(200ml) and 11.5% (300 ml) respectively and the reciprocating type retort sterilization was conducted under the same sterilizing conditions as in Example 1. Results are shown in FIG. 6. The sterilizing time was calculated on the basis that T(0%)/T (10%) = 1.32 from FIG. 6. Experimental Example 1 shows T(0%)/T(1o%) $\geqq$ 1. 2 but if, as will be described later, the amount of the head space is within a range from 2% to 20%, the effect of making the sterilizing time same can be recognized even if there is irregularity in the amount of the head space.

Comparative Example 2

In the same manner as in Example 1, curry of 3000 ml corresponding to the filling rate of 70% was filled in the pouch and the amount of the head space gas of the sample was adjusted to 0% (0 ml), 3.3% (100 ml) 6.7%(200ml) and 10.0% (300 ml) respectively and the reciprocating type retort sterilization was conducted under the same sterilizing conditions as in Example 1. Results are shown in FIG. 6. The sterilizing time was calculated on the basis that T(0%)/T (10%) = 1.41 from FIG. 6.

Comparative Examples 3 and 4

In the same manner as in Example 1, curry of 3000 ml corresponding to the filling rate of 70% was filled in the pouch and the amount of the head space gas of the sample was adjusted to 0% (0 ml), 1.7% (50 ml) 3.3%(100ml), 6.7% (200 ml) and 10%(300 ml) respectively and the stationary type retort sterilization (Comparative Example 3) and the rotational type retort sterilization (Comparative Example 4) were conducted under the same sterilizing conditions as in Example 1. Results are shown in FIG. 6.

In FIG. 6, the sterilizing time of the reciprocation type sterilization of the pouch at the filling rate of 70% has the effect of shortening of the sterilizing time compared with the sterilizing time of the stationary type sterilization of the pouch at the same filling rate. In the range of 0 - 5% of the amount of the head space, the effect of shortening of the sterilizing time tends to depend somewhat on the amount of the head space gas but in the range of 5 - 20% of the amount of the head space, it does not depend upon the amount of the head space gas. From this, it is understood that the breadth of variation in the sterilizing time due to difference in the head space is within 20%. In the case of the filling rate of 30 - 50 vol. % as in Examples 1 - 4, shortening of the sterilizing time is observed without depending upon the amount of the head space and therefore these filling rates are preferable from the standpoint of the quality of the contents. In such filling amount, the breadth of variation in the sterilizing time is within 20% ($1 \leqq T(0\%)/T(10\%) \leqq 1.2$) and hence it is not necessary to provide a special device for control of the amount of the head space gas. In the case of Experimental Example 1 in which the filling rate exceeds 50 vol% and not more than 60 vol%, the breadth of the sterilizing time is 20% or below if the amount of the head space is within a range corresponding to 2 - 20% of the filling amount of the contents and, therefore, this case satisfies the condition of $1 \leqq T(0\%)/T(10\%) \leqq 1.35$ in which the sterilizing time becomes constant without necessity of substantially adjusting the amount of the head space. In the case of the filling amount of 30 - 50 vol. % which satisfies the condition of $1 \leqq T(0\%)/T(1.0\%) \leqq 1.2$, change in the temperature at one measuring spot is small and $F_0$ value can be obtained easily by measurement at only a few spots and, as result, burden of controlling a thermocouple can be reduced. In FIG. 6, sterilizing time until $F_0 = 10$ at the amount of the head space within a range from 0% to about 15% of the volume of the liquid food is shown. In the experiment, even in a range of 10% - 20% of the amount of the head space gas, the sterilizing time remained substantially the same value as in the vicinity of $F_0 = 10$.

FIG. 10 shows the range of 0 - 5% of the amount of the head space of FIG. 6 in an enlarged scale. In a pouched food, it is desirable, for prevention of deterioration of the contents due to oxidization and improvement of the loading efficiency, to set the amount of the head space at as small amount as possible. According to the sterilizing method of the fourth aspect of the invention, the sterilizing time can be shortened even in a case where the amount of the head space gas is only a small amount.

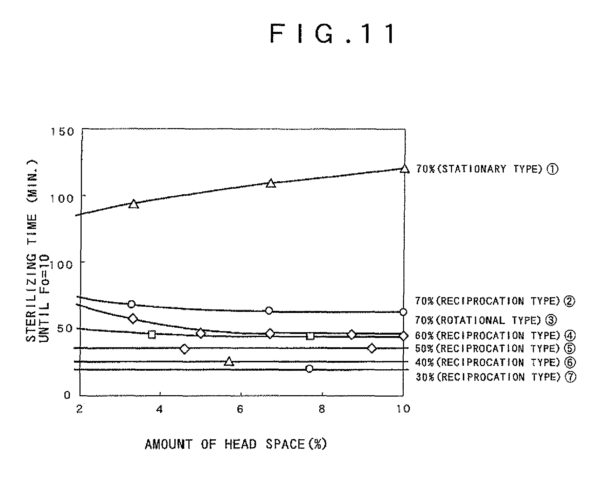

FIG. 11 shows the range of 2 - 10% of the amount of the head space of FIG. 6 in an enlarged scale. In filling a pouched product, for adjusting the head space to 0 ml, it is necessary to carry out sealing with a part of the contents held in the sealed portion and, in actual production, it often becomes difficult to apply such method from the standpoint of stability of the seal. As will be apparent from FIG. 11, if the amount of the head space is within a range of 2 - 20%, preferably within a range of 2 - 10%, the sterilizing time can be made constant even if there is irregularity in the amount of the head space. For this reason, according to the sterilizing method of the fifth aspect of the invention, the sterilizing time can be shortened even in a pouched product having a small amount of head space which is filled by using an ordinary type filler without a severe adjustment of the amount of the head space.

In the case of a pouched product in which the filling rate is less than 30%, the internal capacity to the pouch is so small that that there are problems in the configuration and appearance of the product resulting in loss of the market value of the product or, due to the insufficient filling amount, the cost performance is deteriorated and the value as the product is lost. Moreover, since the thickness of the pouch becomes so small that the sterilizing time becomes short even by using the stationary type sterilization and, therefore, there is not much advantage in employing the reciprocating type sterilization for shortening of the sterilizing time.

Description has so far been made about results of the experiments made by using the pouch of the size of 240mm $\times$ 350mm $\times$ 65mm. The advantageous results of the invention can be obtained also in sterilizing a liquid food filled in pouches of other sizes such, for example, as a non-domestic type cooked food filled in a large size pouch having an internal capacity of 1kg to 5kg. Similar advantageous results also were obtained in a case where the sterilizing method was applied to sterilizing food at which $F_0$ value was other than $F_0 = 10$. In Examples 2 to 4 and Experimental Example 1, on the basis of the experiments which were made by changing the amount of the contents for the same size of the pouch, the filling rate of 30 - 60 vol. % were obtained as the filling rate at which the sterilizing time can become substantially constant and can be shortened without depending upon the amount of the amount of the head space gas. In the case of actual production, there is often a case where the amount of the contents in the pouch is determined. In that case, a proper pouch size may be calculated and selected within a scope of the organization and functional effects of the present invention. In the above described examples, the sterilizer was reciprocated continuously during the reciprocating retort sterilization. Reciprocation however may be made intermittently or the frequency of reciprocation may be changed during reciprocation in accordance with change in the viscosity of the contents in the scope in which the advantageous results of the invention can be achieved. In Examples 1 to 4 and Experimental Example 1, pressure in the sterilizing chamber during sterilization was set at a constant pressure so as to prevent change from the amount of the head space before start of sterilization. In actual production, pressure in the sterilizing chamber may be constant or may be changed suitably for achieving a desirable amount of the head space. Pressure in the retort sterilizing chamber during retort sterilization should be within a range from -0.07 MPa to +1.0 MPa at gauge pressure and, more preferably, be within a range from 0 MPa to +0.5 MPa. When this pressure is less than 0 MPa, a vacuum device becomes necessary whereas when this pressure exceeds +0.5 MPa, the cost of the equipment becomes high for securing safety.

Example 5

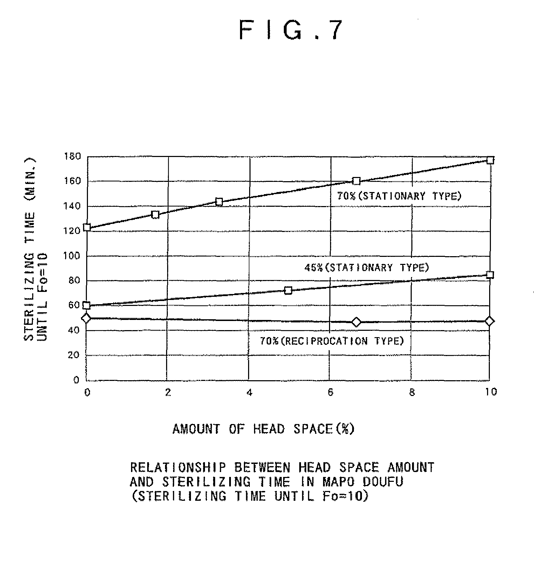

An experiment was made by changing contents of the pouch. Mapo doufu stock was filled in the same pouch as used in Example 1 at the filling rate of 70% and the amount of the head space gas of the sample was adjusted to 0%, 6.7% and 10% respectively and the reciprocating type retort sterilization was conducted under the same sterilizing conditions as in Example 1. Results are shown in FIG. 7. The sterilizing time was calculated on the basis that $T(0\%)/T(10\%) = 1.14$ from FIG. 7.
Contents of the experiment: Mapo doufu stock (Commercially available mapo doufu stock filled in a large size pouch was re-packed. Viscosity was 1500 mPa · s at 40˚C, 1210 mPa · s at 60˚C and 1010 mPa · s at 80˚C a s measured by a B-type viscometer at 50 rpm. Viscosity at the sterilizing temperature of 121 ˚C was assumed to be 670 mPa · s (see description to be made later).

Comparative Example 5

In the same manner as in Example 5, Mapo doufu stock was filled in the pouch at the filling rate of 45% and the amount of the head space gas of the sample was adjusted to 0%, 5% and 10% respectively and the stationary type retort sterilization was conducted under the same sterilizing conditions as in Example 5. Results are shown in FIG. 7.

Comparative Example 6

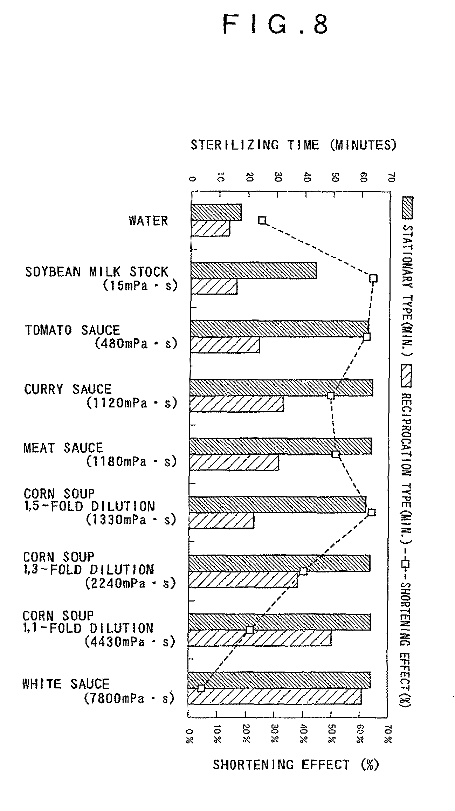

In the same manner as in Example 5, Mapo doufu stock was filled in the pouch at the filling rate of 70% and the amount of the head space gas of the sample was adjusted to 0%, 1.7%, 3.3%, 6.7% and 10% respectively and the stationary type retort sterilization was conducted under the same sterilizing conditions as in Example 5. Results are shown in FIG. 7.
In FIG. 7, the sterilizing time in the reciprocating type sterilization of the pouch at the filling rate of 70% had the effect of shortening of the sterilizing time as compared with the sterilizing time in the stationary type sterilization of the pouch at the filling rate of 70% and the pouch at the filling rate of 45%. The sterilizing time of the former was substantially constant over the entire range of 0 - 10% of the amount of the head space without depending on the amount of the h ead space and the breadth of variation in the sterilizing time due to difference in the amount of the head space was within 20% ($1 \leqq T(0\%)/(T10\%) \leqq 1.2$). In the case that the contents of the pouch was curry, there was some difference in the sterilizing time depending upon the amount of the head space at the filling rate of 70%. In the case of mapo doufu, the sterilizing time was substantially constant at the filling rate of 70%. Viscosity of the contents at the sterilizing temperature is considered to have influenced this difference.
Further, various types of food product were filled in the pouches at the filling rate of 45% in the same manner as in Example 1 and the amount of the head space gas was adjusted to 0 ml and sterilization was carried out. The reciprocating type sterilization was compared with the stationary type sterilization about relationship between viscosities of the various foods and the sterilizing time shortening effect. Results are shown in Table 4, Table 5 and FIG. 8. In FIG. 8, the horizontal axis shows the name of the food and viscosity at 121˚C a nd the vertical axis shows the sterilizing time until $F_0$ value becomes $F_0 = 10$ and rate of shortening of the sterilizing time of the reciprocating type sterilization to the sterilizing time of the stationary type sterilization. As to viscosity, when measurement of viscosity of the contents during sterilization was difficult due to the fact that the sterilizing temperature exceeded 100˚C a s in the examples of the present invention, the Andrade's viscosity formula, i.e., $\eta \propto \exp(E/RT)$ where $\eta$ designates viscosity rate, E activation energy of fluidity, R gas constant and T absolute temperature (˚K) was employed to calculate viscosity of the contents under sterilization.
Temperatures under 100˚C a t 2 spots or more were measured by a B-type viscometer at 50 rpm and viscosity was presumed by calculation. In the above described examples, on the basis of results of measurement under this condition at 40˚C, 60˚C, and 80˚C, viscosity at 121˚C w as calculated and presumed.

Table 4

| Name of food | | water | soybean milk stock | tomato sauce | curry sauce | meat sauce |
|---|---|---|---|---|---|---|
| Viscosity (mPa · s) | 40˚C | 0.65 | 26 | 1040 | 3230 | 3230 |
| | 60˚C | 0.47 | 23 | 880 | 2300 | 2550 |
| | 80˚C | 0.36 | 20 | 720 | 1800 | 2040 |
| | 121˚C (calculated value) | 0.21 | 16 | 480 | 1120 | 1180 |
| Reciprocating type (min.) | | 12.5 | 15.5 | 23.5 | 32.5 | 31 |
| Stationary type(min.) | | 16.5 | 43.5 | 62.5 | 64.5 | 64 |
| Shortened time (min.) | | 4 | 28 | 39 | 32 | 33 |
| Shortening effect % | | 24.2 | 64.4 | 62.4 | 49.6 | 51.5 |

(viscosity of water taken from Rika Nenpyo Desk Version, published by Maruszen Kabushiki Kaisha on Novmber 30, 1989, page 447)

Table 5

| Name of food | | corn soup 1.5-fold dil. | corn soup 1.3-fold dil. | corn soup 1.1-fold dil. | white sauce |
|---|---|---|---|---|---|
| Viscosity (mPa · s) | 40˚C | 2050 | 4400 | 7650 | - |
| | 60˚C | 1930 | 3210 | 6240 | 11680 |
| | 80˚C | 1730 | 3120 | 5700 | 9130 |
| | 121˚C (calculated value) | 1330 | 2240 | 4430 | 7800 |
| Reciprocating type (min.) | | 22 | 38 | 50.5 | 61.5 |
| Stationary type(min.) | | 62 | 64 | 64.5 | 64.5 |
| Shortened time (min.) | | 40 | 26 | 14 | 3 |
| Shortening effect (%) | | 64.5 | 40.6 | 21.7 | 4.7 |

(Water was used for diluting corn soup. Viscosity of white sauce at 40˚C could not be measured.)

From the above results, in the case of white sauce which had the highest viscosity, there was little effect of shortening the sterilizing time of the reciprocating type sterilization compared to the stationary type sterilization but, in the case of corn soup of 1.1-fold dilution which had the next highest viscosity, the sterilizing time shortening effect of about 20% was observed. It will be understood that in the corn soup of 1.3-fold dilution, the sterilizing time shortening effect became remarkable and, in the corn soup of 1.5-fold dilution, this effect increased further. In contrast, in the case of water, viscosity was low and the sterilizing time was short even by using the stationary type sterilization, there was little effect of shortening the sterilizing time by the reciprocating sterilization. From these results, for achieing the sterilization time shortening effect, viscosity of the liquid food during sterilization at the time when the sterilization start temperature has been reached should preferably be 4500 mPa · s or below, more preferably be 2500 mPa · s or below and, most preferably be 1500 mPa · s or below. The lower limit of the viscosity should preferably be 0.2 mPa · s and more preferably be 10 mPa · s.

In the above described examples, experimental example and comparative examples, the cooling process was started when $F_0$ value at the cold spot became 10 minutes. In the application of the present invention, the cooling process may be started when $F_0$ value is shorter or longer than 10 minutes and a suitable period of time for attaining necessary sterilizing value may be selected for each type of contents.

**Claims**

1.  A method for sterilizing a liquid food filled in a pouch comprising a step of filling a liquid food in a flexible pouch and sealing the pouch and a step of sterilizing the liquid food filled in the pouch by reciprocating the pouch in a sterilizer, wherein acceleration speed of reciprocation in reciprocating sterilization, pressure in the sterilizer, viscosity of the liquid food and filling rate of the liquid food are adjusted so that, on the assumption that sterilizing time is a period of time from time at which temperature in the sterilizer has reached sterilizing temperature (Tr˚C) till time at which sterilization value (F(Tr˚C) of the sealed pouch given by the following formula (1)

$$\mathrm{F(Tr^\circ C)} = \int_0^T 10^{(T_i - T_r)/10} dt \cdot \cdot \cdot (1)$$

    (wherein Ti represents temperature at the coldest spot in the pouch at t minutes after start of sterilization and dt represents infinitesimal time)
    becomes F(Tr˚C) = 10 minutes, sterilizing time (T(0%)) at which head space of the sealed pouch which is used as an indicator is 0% and sterilizing time (T(10%)) at which the head space of the sealed pouch is 10% will satisfy the following formula (2)

$$1 \leqq T(0\%)/T(10\%) \leqq 1.2 \quad \cdots (2).$$

2.  A method as defined in claim 1 wherein the sealed pouch is placed on a shelf in the sterilizer in unrestrained condition and the sterilizer is operated to reciprocate the pouch at acceleration speed of reciprocation within a range from 0.1G to 0.3G.

3.  A method as defined in claim 1 or 2 wherein amount of filling of the liquid food is adjusted to a range from 30 volume % to 70 volume % on the assumption that internal capacity of the pouch when the liquid food is filled fully is 100 volume %.

4.  A method as defined in any of claims 1 - 3 wherein the amount of the head space is adjusted to a range from 0% to 5% of the volume of the liquid food.

5.  A method as defined in any of claims 1 - 3 wherein the amount of the head space is adjusted to a range from 2% to 20% of the volume of the liquid food.

6.  A method as defined in any of claims 1 - 5 wherein, when the liquid food has reached the sterilizing start temperature, viscosity of the liquid food measured or calculated by using a B-type viscometer at 50 rpm is within a range from 0.2 mPa · s to 4500 mPa · s.

7.  A method for sterilizing a liquid food filled in a pouch comprising a step of filling a liquid food in a flexible pouch and sealing the pouch and a step of sterilizing the liquid food filled in the pouch by reciprocating the pouch in a sterilizer wherein viscosity of the liquid food measured or calculated by using a B-type viscometer at 50 rpm is within a range from 0.2 mPa · s to 4500 mPa · s and amount of filling of the liquid food is within a range from 30 volume % to 60 volume % on the assumption that internal capacity of the pouch when the liquid food is filled fully is 100 volume %.

8.  A method as defined in claim 7 wherein the sealed pouch is placed on a shelf in the sterilizer in unrestrained condition and the sterilizer is operated to reciprocate the pouch at acceleration speed of reciprocation within a range from 0.1G to 0.3G.

9.  A method as defined in claim 7 or 8 wherein the amount of the head space of the sealed pouch is within a range from 2% to 20% of the volume of the liquid food.

FIG.1

# F I G . 2

350 mm

20 mm

20 mm 20 mm

20 mm 20 mm 135 mm

240 mm

A                                                                A

⑥ ⑦ ⑧ ⑨ ⑩
① ② ③ ④ ⑤

⑥ ⑦ ⑧ ⑨ ⑩
① ② ③ ④ ⑤

ABOUT 45 mm

25 mm

20 mm

A                                                                A

10 SPOTS FOR MEASURING TEMPERATURE
OF CONTENTS IN EXAMPLE 1

17

# FIG.3

TEMPERATURE CHANGE IN CONTENTS
AND RETORT CHAMBER IN EXAMPLE 1

# F I G . 4

350 mm

240 mm

B        B

C        C

40 mm   40 mm   135 mm

40 mm

⑪④⑨  ⑦⑤⑧  ⑫⑥⑩

①      ②      ③

⑫

⑦

⑪      ⑥

⑤

④      ⑩

⑧

⑨

5 mm INTERVAL

B

B

B − B SECTION

⑫

①      ②      ③

C

C

15 mm   20 mm   25 mm

C

C − C SECTION

12 SPOTS FOR MEASURING TEMPERATURE
OF CONTENTS IN COMPARATIV EXAMPLE 1

19

# F I G . 5

RETORT CHAMBER TEMPERATURE

CONTENTS TEMPERATURE AT 12 SPOTS

TEMPERATURE CHANGE IN CONTENTS
AND RETORT CHAMBER IN COMPARATIVE EXAMPLE 1

# F I G . 6

RELATIONSHIP BETWEEN FILLING RATE AND STERILIZING TIME
(STERILIZING TIME UNTIL Fo=10)

# F I G . 7

RELATIONSHIP BETWEEN HEAD SPACE AMOUNT
AND STERILIZING TIME IN MAPO DOUFU
(STERILIZING TIME UNTIL Fo=10)

# FIG.8

# FIG.9

ATMOSPHERIC TEMPERATURE
(TEMPERATURE IN CHAMBER)

HEAD SPACE 10%

HEAD SPACE 0%

TEMPERATURE

Tr

$(Ti+\triangle Ti)$
Ti

$\triangle Ti$

$\triangle ti$

To

TIME

0     ti    $(ti+\triangle ti)$

$T_{(10\%)}$

$T_{(0\%)}$

# FIG.10

STERILIZING TIME (MIN.)
UNTIL Fo=10

150

100

50

0

0     1     2     3     4     5

AMOUNT OF HEAD SPACE (%)

70%(STATIONARY TYPE)   ①

70%(RECIPROCATION TYPE)  ②

70%(ROTATIONAL TYPE)  ③

60%(RECIPROCATION TYPE)  ④

50%(RECIPROCATION TYPE)  ⑤

40%(RECIPROCATION TYPE)  ⑥

30%(RECIPROCATION TYPE)  ⑦

# F I G . 1 1

<table>
<tr><td colspan="2"><b>INTERNATIONAL SEARCH REPORT</b></td><td>International application No.<br>PCT/JP2008/064109</td></tr>
</table>

| A. CLASSIFICATION OF SUBJECT MATTER |
|---|
| A23L3/00(2006.01)i, A23L3/14(2006.01)i, B65B55/02(2006.01)i, B65B55/14 (2006.01)i |

According to International Patent Classification (IPC) or to both national classification and IPC

| B. FIELDS SEARCHED |
|---|
| Minimum documentation searched (classification system followed by classification symbols)<br>A23L3/00, A23L3/14, B65B55/02, B65B55/14 |

| Documentation searched other than minimum documentation to the extent that such documents are included in the fields searched |
|---|
| Jitsuyo Shinan Koho      1922-1996   Jitsuyo Shinan Toroku Koho   1996-2008<br>Kokai Jitsuyo Shinan Koho   1971-2008   Toroku Jitsuyo Shinan Koho   1994-2008 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 08-038131 A (Fujimori Kogyo Co., Ltd.), 13 February, 1996 (13.02.96), (Family: none) | 1-9 |
| Y | JP 06-001330 A (House Foods Industrial Co., Ltd.), 11 January, 1994 (11.01.94), (Family: none) | 1-9 |
| Y | JP 03-277261 A (House Foods Industrial Co., Ltd.), 09 December, 1991 (09.12.91), (Family: none) | 1-9 |
| Y | JP 2001-231521 A (Hisaka Works, Ltd.), 28 August, 2001 (28.08.01), (Family: none) | 1-9 |

☒ Further documents are listed in the continuation of Box C.    ☐ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>22 October, 2008 (22.10.08) | Date of mailing of the international search report<br>04 November, 2008 (04.11.08) |
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2008/064109

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 57-005678 A  (Toyo Seikan Kaisha, Ltd.), 12 January, 1982 (12.01.82), (Family: none) | 1-9 |
| Y | JP 03-236753 A  (House Foods Industrial Co., Ltd.), 22 October, 1991 (22.10.91), (Family: none) | 1-9 |
| Y | JP 03-072860 A  (House Foods Industrial Co., Ltd.), 28 March, 1991 (28.03.91), (Family: none) | 1-9 |
| Y | JP 61-001371 A  (House Foods Industrial Co., Ltd.), 07 January, 1986 (07.01.86), & US 4874580 A        & GB 2183444 A & FR 2565556 A1 | 1-9 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI9221108 B
- JP 2008017726 A

- JP SHO6339225 B

**Non-patent literature cited in the description**

- Basis and Application of Retort Foods. Kabushiki Kaisha Saiwai Shobo, 76-80